# EUROPÄISCHE PATENTANMELDUNG

(11) **EP 0 893 246 A2**
(43) Veröffentlichungstag der Anmeldung: **27.01.1999**
(21) Anmeldenummer: 98113669.0
(22) Anmeldetag: 22.07.1998
(51) Int. Cl.: B32B 27/08

(54) **Verbundkörper mit schichtartigem Aufbau**

(30) Priorität: 25.07.1997 DE 29713251 U; 20.08.1997 DE 29714889 U
(71) Anmelder: PERGAPLASTIC GMBH, 74731 Walldürn-Altheim (DE); Lehmann & Voss & Co., D-20354 Hamburg (DE)
(72) Erfinder: Paul, Fritz, 74736 Hardheim (DE); Feddern, Rainer, 23843 Bad Oldeslohe (DE)
(74) Vertreter: Richter, Werdermann & Gerbaulet

(57) **Zusammenfassung**

Ein Verbundkörper (100) mit einer verbesserten Weiterverarbeitbarkeit und hohe Reißfestigkeit weist einen schichtartigen Aufbau auf, wobei zwischen zwei Trägerfolien (10, 12) als Außenschichten ein duroplastisches Polyesterharz als Mittelschicht (14) angedeutet ist, wobei die Trägerfolie (10, 12) hohe Dichte Polyethylenfolien, (HDPE-Folien) oder vorwiegend aus HDPE bestehende Folien mit oder ohne Zusatz aus Metallocen-PE sind.

## Beschreibung

Die Erfindung betrifft einen Verbundkörper mit schichtartigem Aufbau, wobei zwischen zwei Trägerfolien als Außenschicht ein duroplastisches Polyesterharz als Mittelschicht angeordnet ist.

Bei der Herstellung von Duroplasten, z.B. von Harzmatten bzw. SMC (sheet moulded compound), ist es aus der EP-A- 0 027 191 bekannt, zur Verbesserung der Lagerfähigkeit und Weiterverarbeitbarkeit eines Verbundkörpers aus zwei Lagen eines abziehbaren Trägerfilms, zwischen denen das duroplastische Material angeordnet ist, für den abziehbaren Trägerfilm statt Polyethylen niedriger Dichte (LDPE, low density polyethylene) eine Mischung mit Ethylen und einem Vinylsäurecopolymer zu verwenden. Zwischen zwei Schichten des Trägerfilms wird ein hitzebeständiges duroplastisches Polyesterharz mit Füllstoff und Zusätzen in fließfähiger Form gegossen. Dieser sich vorwärts bewegender Masse werden Verstärkungsfasern aufgestreut. Anschließend wird der schichtartige Verbundkörper durch eine Reihe von Knet- und Verdichtungswalzen geführt. Zum weiteren Teilhärten, beispielsweise zur Eindickung und zur Reifung, wird der Verbundkörper zu einer Rolle aufgewickelt. Bei einem späteren Preßvorgang zum Herstellen eines Fertigteiles wird die Rolle abgewickelt und die Trägerfolien abgezogen. Der Stand der Technik, von dem dabei ausgegangen wird, verwendet an Stelle von Polyamid Polyethylen als Material für die Folien da Polyethylen Monomer diffundieren läßt, so daß sich die Eigenschaffen des Hartes verschlechtern. Um dies zu vermeiden, sollen bei diesem Verbundwerkstoff die Folien nicht dauerhaft mit dem Hart verbunden bleiben; sie dienen lediglich dazu, eine leichte Verarbeitbarkeit und Handhabung sicherzustellen. Vor dem Verarbeiten zu Formteilen werden die Folien entfernt.

Dieser bekannt Verbundkörper ist jedoch aufgrund hoher Kosten für das Trägermaterial unwirtschaftlich. Ferner müssen derartige Trägerfolien wesentlich dicker als 50 µm ausgebildet sein, da sonst eine ausreichende Reißfestigkeit beim Abziehen der Trägerfolien in einem nachfolgenden Weiterverarbeitungsprozeß nicht gewährleistet ist. Ein Abreißen der Trägerfolie während des Weiterverarbeitungsprozesses stoppt jedoch das Verfahren und führt zu Maschinenstillstand, Arbeitsaufwand und damit zu erhöhten Kosten des Herstellungsverfahrens für ein Formteil bzw. Fertigteil aus dem duroplastischen Harzmaterial.

Die DE-A- 1 005 727 beschreibt einen Verbundkörper und ein Verfahren zu dessen Herstellung aus Polyethylen und einem Polyesterharz, der verstärkende Einlagen aufweisen kann und bei dem durch Druck- und Hitzeeinwirkung versucht wird, eine miteinander verschweißte Einheit der beiden Stoffe zu erlangen, wobei jedenfalls nur eine Lage Polyethylen und eine Lage Polyesterharz verwendet wird.

Die DE-A- 4 124 951 offenbart in etwa in Übereinstimmung mit der DE-A-1 005 727 ein Verfahren bzw. einen Schichtstoff, bei dem die Schichten aus Olefinpolymerisat und mindestens einer Deckschicht aus einem gehärteten ungesättigten Polyesterharz derart miteinander verbunden werden bzw. sind, daß eine zerstörungsfreie Trennung nicht mehr möglich ist.

Einen Verbundkörper, der aus einem thermo- und einem duroplastischen Polymer besteht, beschreibt die DE-A- 41 18 388. Der Verbundkörper ist einseitig elektrisch leitfähig. Als duroplastischer Kunststoff wird Polyester und als thermoplastischer Kunststoff Polyethylen verwendet. Hiernach soll ein Formkörper hergestellt werden, der jeweils einseitig elektrisch isolierend und leitend ist.

Die DE-A- 19 59 635 offenbart einen faserverstärkten Kunststoff, der eine geschützte und vor allem glatte Oberfläche bietet, wobei dafür ein Schichtaufbau vorgeschlagen wird, der eine mit Glasfasern verstärkte Harzschicht, die aus einem Polyester besteht, und eine thermoplastische Schicht, die aus einem Polyolefin besteht, aufweist. Mit diesem Kunststoff soll ein Schichtaufbaustoff erhalten werden, der in mechanischer Hinsicht belastbar ist und gleichzeitig eine glatte Oberflächenbeschaffenheit aufweist.

Aus der DE-A- 39 07 505 geht eine Harzmatte hervor, die aus zwei unterschiedlich gefüllten Polyesterharzen besteht, die auf beiden Seiten eine Polyethylen-Folie aufweisen, die auch bei dem fertigen Formteil beibehalten werden.

Ein Schichtwerkstoff und ein Verfahren zu dessen Herstellung sind durch die DE-A- 19 32 167 bekannt. Der Schichtaufbau besteht dabei aus einer glasfaserverstärkten Polyesterharz-Masse, die beidseitig mit einer Polyethylen-Folie überdeckt ist, wobei wenigstens eine Folie perforiert ist. Die Folien dienen zur besseren Handhabbarkeit und werden vor der Verarbeitung wieder entfernt.

Auch die DE-A- 22 35 698 beschreibt einen Schichtwerkstoff, der aus einer Harzschicht, die verstärkt sein kann, und mindestens einer 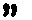 Hautschicht" besteht, wobei zur Ausbildung der Harzschicht Polyester und der 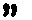 Hautschicht" Polyethylen verwendet wird. Der Schichtstoff wird direkt weiterverarbeitet, wobei die 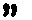 Hautschicht" ein übermäßiges Fließen der Harzschicht unter Temperatureinfluß in der Form verhindern soll.

Es ist Aufgabe der vorliegenden Erfindung, einen verbesserten Verbundkörper der obengenannten Art zur Verfügung zu stellen, der die obengenannten Nachteile beseitigt, d.h. der eine verbesserte Weiterverarbeitbarkeit bei gleichzeitiger Erhöhung der Reißfestigkeit ermöglicht.

Diese Aufgabe wird durch einen Verbundkörper der o. g. Art mit den in Anspruch 1 gekennzeichneten Merkmalen gelöst.

Dazu ist es erfindungsgemäß vorgesehen, daß die Trägerfolien der Außenschicht hoch dichte Polyethylen-Folien (HDPE-Folien) oder Folien sind, die vorwiegend aus HDPE bestehen, wobei bevorzugter Weise die HDPE-Folien oder die vorwiegend aus HDPE bestehenden PE-Folien einen Zusatz von Metallocenen-PE enthalten oder aus einem Gemisch von HDPE und Metallocen-PE bestehen.

Dies hat den Vorteil, daß durch die Verwendung einer HDPE-Folie bei einem Herstellungsverfahren für einen derartigen Verbundkörper weniger Abfall anfällt und gleichzeitig eine verbesserte Weiterverarbeitbarkeit dadurch erzielt wird, daß die Trägerfolien des Verbundkörpers eine sehr hohe Reißfestigkeit haben, so daß Anwendungsgebiete erschließbar sind, für die die bekannten Verbundkörper nicht einsetzbar sind.

Vorzugsweise Weitergestaltungen der Erfindung sind in den Unteransprüchen beschrieben.

In besonders vorteilhafter Weise wird eine kostengünstige Trägerfolie dadurch zur Verfügung gestellt, daß die HDPE-Folie oder die vorwiegend aus HDPE bestehenden PE-Folien mit oder ohne Zusatz von Metallocene-PE eine Dicke von 20 µm bis 30 µm, insbesondere von 25 µm, aufweist, welche wesentlich kostengünstiger ist als eine LDPE-Folie mit einer Dicke von 50 µm.

Zweckmäßigerweise ist die Dichte der HDPE-Folie gleich oder größer als 0,940 g/cm³, wobei sich die Dichte von Größe 0,940g/cm³ im wesentlichen auf den HDPE-Anteil der Folien bezieht.

In einer besonders bevorzugten Ausführungsform ist der Verbundkörper eine Harzmatte.

Zweckmäßigerweise weist die Mittelschicht zusätzlich Füllstoffe und/oder Zusätze auf.

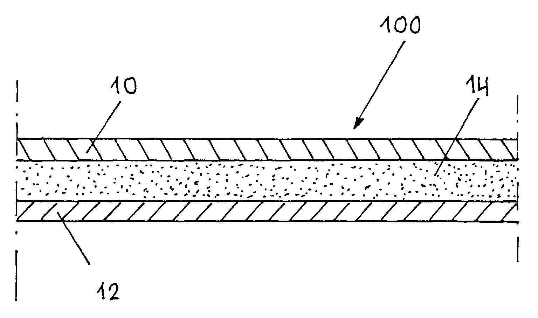

Nachstehend wird die Erfindung anhand der beigefügten Zeichnung näher erläutert. Diese zeigt eine Schnittansicht durch einen erfindungsgemäßen Verbundkörper.

Die dargestellte bevorzugte Ausführungsform des schichtartigen Verbundkörpers 100 weist in einer Sandwich-Struktur drei Schichten auf. Zwei äußere Schichten 10 und 12 dienen als Trägerschicht für eine Mittelschicht 14. Die äußeren Schichten sind Trägerschichten aus einer HDPE-Folie, d.h. aus einer Polyethylen-Folie mit hoher Dichte im Bereich von mehr als 0,940 g/cm³. HDPE steht dabei für "high density polyethylene". Des weiteren kommen als Schichten 10, 12 auch solche aus PE-Folien zum Einsatz, die vorwiegend aus HDPE bestehen, wobei die Folien einen Zusatz von Metallocen-PE enthalten können. PE steht für Polyethylen.

Das Trägermaterial 10, 12 dient zum Schutz und sozusagen als Verpackung der Mittelschicht 14, die auch allseitig umschlossen sein kann, und die ein Ausgangsmaterial für einen nachfolgenden Herstellungsprozeß eines Fertigteiles ist. Diese Mittelschicht 14 besteht dabei vorzugsweise aus einem duroplastischen Polyesterharz mit Füllstoffen und Zusatzstoffen, welche in der Figur als Punkte in der Mittelschicht 14 angedeutet sind.

In einem nachfolgenden Weiterverarbeitungsprozeß werden die Trägerfolien 10 und 12 abgezogen und das Material der Mittelschicht weiterverarbeitet. Hierbei fällt das Material der Trägerfolie als Abfall an. Da erfindungsgemäß eine wesentlich dünnere Folie mit einer Dicke von lediglich 25 µm statt bisher 50 µm verwendet werden kann, fällt bei höherer Reißfestigkeit und niedrigeren Herstellungskosten gleichzeitig weniger Abfall bei der Herstellung eines Fertigteiles aus der Mittelschicht 14 an.

Der Verbundkörper 100 ist vorzugsweise eine Harzmatte oder auch SMC (sheet moulded compound). Derartige Harzmatten sind vorgeformte, härtbare Formmassen mit flächiger Struktur. Sie werden aus Textilglasmatten gemäß DIN 61850 und ggf. auch aus Kunstfasergewebe, die mit Reaktionsharzen, meist UP, unter Zusatz vorwiegend anorganischer Füllstoffe imprägniert sind, aufgebaut und gehören zur Gruppe der Prepregs. UP-H sind in DIN 16913 typisiert, beispielsweise Typ 830 und 834, und werden vorzugsweise für großflächige und mechanisch hoch beanspruchte Formteile im Preßverfahren verarbeitet. Dabei kommt beispielsweise ein Preßdruck von 100 bis 200 bar zur Anwendung.

Der Verbundkörper findet beispielsweise Anwendung in der Möbel-, Flug- und Fahrzeugindustrie oder in der Elektrotechnik, beispielsweise bei Langfeldleuchten. In einer vorteilhaften Ausgestaltung hat der erfindungsgemäße Verbundkörper eine flammwidrige bzw. nicht brennbare Einstellung. Für Low-profile-Harze werden vorzugsweise pigmentierbare Harzmatten verwendet.

Ein wichtiger Aspekt der Erfindung liegt in der Verwendung einer HDPE-Folie bzw. einer HDPE enthaltenen PE-Folie mit und ohne Zusatz von Metallocen-PE, auch in Form eines Gemisches von HDPE und Metallocen-PE, bei der Herstellung eines schichtartig aufgebauten Verbundkörpers als erste Trenn- und/oder Trägerschicht, auf welche die Komponenten des Verbundkörpers aufgebracht werden, und als zweite Trenn- und/oder Trägerschicht, welche das Verbundmaterial abdeckt, so daß die Folien den Verbundkörper vor seiner weiteren Bearbeitung und/oder Verarbeitung sandwichartig umschließen und einfach ohne abreißen von dem Verbundkörper abziehbar sind.

## Patentansprüche

1. Verbundkörper (100) mit schichtartigem Aufbau, wobei zwischen zwei Trägerfolien (10,12) als Außenschicht ein duroplastisches Polyesterharz als Mittelschicht (14) angeordnet ist,
dadurch gekennzeichnet,
daß die Trägerfolien (10,12) der Außenschichten hoch dichte Polyethylen-Folien (HDPE-Folien) oder PE-Folien, die vorwiegend aus HDPE bestehen, sind.

2. Verbundkörper nach Anspruch 1,
dadurch gekennzeichnet,
daß die HDPE-Folien oder die vorwiegend aus HDPE bestehenden PE-Folien (10, 12) einen Zusatz von Metallocen-PE aufweisen.

3. Verbundkörper nach Anspruch 1,
dadurch gekennzeichnet,
daß die HDPE-Folien (10, 12) oder die vorwiegend aus HDPE bestehenden PE-Folien (10, 12) aus einem Gemisch von HDPE und Metallocen-PE bestehen.

4. Verbundkörper nach einem der Ansprüche 1 bis 3,
dadurch gekennzeichnet,
daß die HDPE-Folie (10,12) oder die vorwiegend aus HDPE bestehende Folie (10, 12) eine Dicke von 20 µm bis 30 µm, insbesondere von 25 µm, aufweist.

5. Verbundkörper nach einem der Ansprüche 1 bis 4,
dadurch gekennzeichnet,
daß die Dichte der HDPE-Folie (10,12) oder bezogen auf den HDPE-Anteil der Folien (10, 12) gleich oder größer als 0,940 g/cm³ ist.

6. Verbundkörper nach einem der Ansprüche 1 bis 5,
dadurch gekennzeichnet,
daß dieser eine Harzmatte ist.

7. Verbundkörper nach einem der Ansprüche 1 bis 6,
dadurch gekennzeichnet,
daß die Mittelschicht (14) zusätzlich Füllstoffe und/oder Zusätze aufweist.

8. Verwendung von Trägerfolien (10, 12) aus hoch dichten Polyethylen - Folien, (HDPE-Folien) oder vorwiegend aus HDPE mit und ohne Zusatz von Metallocen-PE bestehenden Folien (10, 12) in einer Dicke von 20 µm bis 30 µm, insbesondere von 25 µm, und einer Dichte gleich oder größer als 0,940 g/cm³ bezogen auf den HDPE-Anteil der Folien als Außenschichten für einen Verbundkörper (100) zur Anwendung in der Möbel-, Flug- und Fahrzeugindustrie sowie Elektrotechnik mit einer Mittelschicht (14) aus einem duroplastischen Polyesterharz zur Schaffung eines Verbundkörpers mit hoher Reißfestigkeit und verbesserter Weiterverarbeitbarkeit.
